# EUROPÄISCHE PATENTSCHRIFT

(11) **EP 3 366 635 B1**
(45) Veröffentlichungstag und Bekanntmachung des Hinweises auf die Patenterteilung: **31.07.2019**
(21) Anmeldenummer: 18152224.4
(22) Anmeldetag: 18.01.2018
(51) Int. Cl.: B66C 23/64, B66C 23/70

(54) **VERBOLZUNGSEINRICHTUNG**
BOLTING DEVICE
DISPOSITIF DE BOULONNAGE

(30) Priorität: 24.02.2017 DE 202017101042 U
(43) Veröffentlichungstag der Anmeldung: 29.08.2018
(73) Patentinhaber: Manitowoc Crane Group France SAS, 69574 Dardilly Cedex (FR)
(72) Erfinder: EHRENTRAUT, Nils, 26384 Wilhelmshaven (DE); HAAG, Arthur, 26180 Rastede (DE)
(74) Vertreter: SSM Sandmair

(56) Entgegenhaltungen:
- JP-A- H09 278 373
- JP-A- 2001 341 981
- US-B2- 8 522 988

## Beschreibung

Die vorliegende Erfindung betrifft eine Verbolzungseinrichtung, mittels welcher Krankomponenten miteinander verbolzt werden. Die vorliegende Erfindung betrifft ferner eine Kran-Auslegerspitze mit einer solchen Verbolzungseinrichtung.

Beim Rüsten von Kranen werden die einzelnen Krankomponenten üblicherweise mittels Bolzen miteinander verbunden. Eine sehr weit verbreitete Lösung ist es, im Wesentlichen zylindrische Bolzen mittels Hammerschlägen in die dafür vorgesehenen Aufnahmen der zu verbindenden Komponenten ein- bzw. nach dem Einsatz wieder herauszuschlagen. Bei dieser sehr einfachen Lösung ist es allerdings notwendig, dass die entsprechenden Bolzenaufnahmen sehr gut mit Hammerschlägen zu erreichen sind, was bei immer komplexeren und kompakteren Konstruktionen nicht mehr immer zu erreichen ist. Um eine Verbolzung an unzugänglichen Stellen oder unter beengten Platzverhältnissen zu ermöglichen, haben sich Verbolzungssysteme bewährt, bei welchen die Bolzen hydraulisch, pneumatisch oder mechanisch in ihre Aufnahmen eingedrückt oder aus diesen wieder ausgezogen werden.

So zeigen beispielsweise die US 8,522,988 B2, die US 2004/0104192 A1, die US 4,141,455 B1 oder die DE 200 07 050 U1 mechanische Lösungen, bei welchen zwei gegenüberliegende Bolzen mittels Drehung eines dazwischenliegenden und ein Gewinde aufweisenden Elements voneinander wegbewegt und so in entsprechende Bolzenaufnahmen eingedrückt werden können, während eine umgekehrte Betätigung die Bolzen wieder aus ihren Aufnahmen herausfahren lässt. All diesen Lösungen ist gemein, dass das zwischen den Bolzen liegende zentrale Element zwei gegenläufige Gewinde aufweist, welche direkt mit den Bolzen oder indirekt mit Koppelelementen kämmen, so dass bei einer Drehung des zwischen den Bolzen liegenden Elements die Bolzen in einer symmetrischen Bewegung voneinander weg oder zueinander hin bewegt werden.

Je nach Größe der Verbolzung und der hierfür verwendeten Passungsart können an den Kontaktstellen zwischen Bolzen und den hierfür vorgesehenen Aufnahmen sehr hohe Reibungskräfte entstehen, welche durch etwaige Verunreinigungen zusätzlich erhöht werden können. Auch kann nicht gänzlich ausgeschlossen werden, dass sich die Bolzen bis zu einem bestimmten Grad zueinander "verkanten", was die zum Bewegen der Bolzen notwendigen Kräfte zusätzlich erhöht.

Es ist die Aufgabe der vorliegenden Erfindung, eine mechanische Verbolzungseinrichtung bereitzustellen, bei welcher die zum Ver- und Entbolzen notwendigen Kräfte gegenüber den bisher bekannten Lösungen entscheidend reduziert werden.

Diese Aufgabe wird durch den Gegenstand des unabhängigen Anspruchs 1 gelöst. Die Unteransprüche definieren dabei bevorzugte Ausführungsformen der vorliegenden Erfindung.

Die erfindungsgemäße Verbolzungseinrichtung umfasst dabei zwei verdrehsicher gehaltene Bolzen, die über ein Spindelelement aneinander gekoppelt sind, wobei ein erster Bolzen über einen Gewindeeingriff mit einem korrespondierenden Gewinde des Spindelelements in Verbindung steht, wobei eine Rotation des Spindelelements um dessen zentrale Längsachse eine Bewegung des ersten Bolzens entlang der Längsachse bewirkt, und wobei ein zweiter Bolzen in einer festgelegten axialen Position rotatorisch am Spindelelement gelagert ist.

Mit anderen Worten umfasst die erfindungsgemäße Verbolzungseinrichtung zwei Bolzen, welche sich im Gegensatz zu einer um ihre zentrale Längsachse rotatorisch beweglichen Spindel nicht verdrehen lassen, also gegenüber der sich drehenden Spindel verdrehfest gehalten sind. Ziel dieser Anordnung ist es, dass beim Drehen der Spindel um ihre zentrale Längsachse der Abstand zwischen den Bolzen variiert wird. Gegenüber der Spindel ändert allerdings nur einer der beiden Bolzen seine axiale Lage, indem er unmittelbar oder mittelbar mit einem Gewinde der Spindel kämmt und bei deren Drehung parallel zu oder gar auf der zentralen Längsachse wandert. Der zweite Bolzen hingegen verbleibt bei Drehung der Spindel an seiner festgelegten axialen Position relativ zur Spindel, da er über eine Drehlagerung mit dieser gekoppelt ist.

Hieraus wird bereits der Vorteil der erfindungsgemäßen Lösung gegenüber den bisher bekannten Lösungen deutlich: Während sich die Lösungen aus dem Stand der Technik gegenläufiger Gewinde bedienen, um auf diese Weise eine symmetrische Bewegung der Bolzen zu erreichen, hat die vorliegende Erfindung gerade eine asymmetrische oder "einseitige" Bewegung der Bolzen relativ zum Spindelelement zum Ziel. Unter Annahme der Verwendung identischer Gewindesteigungen folgt daraus, dass sich die Abstandsänderung zwischen den Bolzen bei einer vorgegebenen Anzahl von Spindelumdrehungen halbiert, was wiederum zur Folge hat, dass das hierfür notwendige und über die Spindel aufzubringende Moment halbiert wird. Wie später noch eingehender erläutert werden wird, werden die zum Ver- und Entbolzen notwendigen Betätigungskräfte also in entscheidendem Maße reduziert.

Gemäß einer bevorzugten Ausführungsform ist das Spindelelement dabei koaxial zu den Bolzen angeordnet. Das Spindelelement weist dabei dieselbe zentrale Längsachse auf wie die beiden im Wesentlichen zylindrischen Bolzen. Dabei ist es vorstellbar, dass das Spindelelement in der Art einer Hülse ausgestaltet ist, welche zumindest einen Bolzen umfänglich umschließt, wobei der relativ zum Spindelelement translatorisch bewegbare Bolzen mit einem Innengewinde der Hülse kämmt. Umgekehrt ist es jedoch ebenso vorstellbar, dass das Spindelelement im Wesentlichen als Gewindestange ausgebildet ist, die in zumindest einen der beiden Bolzen einläuft, wobei der translatorisch bewegbare Bolzen mit einem Außengewinde der Gewindestange kämmt. Der translatorisch festgelegte Bolzen kann in beiden Fällen an einem Ende des Spindelelements rotatorisch an die Spindel gekoppelt sein. Alternativ zu einem koaxialen Spindelelement kann dieses auch versetzt zu den beispielsweise koaxial zueinander angeordneten Bolzen angeordnet sein, die dann allerdings über entsprechende, sich etwa radial von der Spindel forterstreckende Zwischenelemente an die Spindel gekoppelt sind.

Gemäß einer weiteren bevorzugten Ausführungsform ist die Verbolzungseinrichtung gegenüber, insbesondere an zumindest einem der zu verbolzenden Elemente schwimmend gelagert. So kann die Verbolzungseinrichtung etwa nach dem Entbolzen an einem der zu verbolzenden Elemente verbleiben, wobei noch immer sichergestellt wird, dass die Bolzen beidseitig in ihre entsprechenden Aufnahmen ein- bzw. aus diesen ausfahren. Es ist nämlich zu beachten, dass in Abhängigkeit des Reibkraftunterschieds zwischen den gegenüberliegenden Verbolzungsstellen zuerst der Bolzen eingeschoben und auch wieder ausgezogen wird, an welchem die geringere Reibkraft anliegt.

Gemäß einer weiteren bevorzugten Ausführungsform der vorliegenden Erfindung weist der erste Bolzen ein erstes Halteelement und der zweite Bolzen ein zweites Halteelement auf, welche den jeweiligen Bolzen gegenüber dem Spindelelement verdrehsicher halten. Auch können diese Halteelemente dazu dienen, den ersten und den zweiten Bolzen und somit die gesamte Verbolzungseinrichtung gegenüber zumindest einem der zu verbolzenden Elemente schwimmend zu lagern. So kann sich etwa ein solches Halteelement radial vom jeweiligen Bolzen forterstrecken und sich zusammen mit dem Bolzen an einer ortsfesten Struktur abstützen, um ein Verdrehen des Bolzens um seine Längsachse zu verhindern. Weist eine solche ortsfeste Struktur etwa ein als Führungsschlitz fungierendes Langloch auf, das sich parallel zur Spindellängsachse erstreckt, so kann sich ein in das Langloch eingreifendes Halteelement zwar an den Seitenflanken des Langlochs abstützen, hat aber noch immer einen translatorischen Freiheitsgrad entlang des Langlochs.

Gemäß einer weiteren Ausführungsform weist der erste Bolzen eine erste, drehfest mit dem Bolzen verbundene Buchse auf, die ihrerseits einen Gewindeeingriff mit einem korrespondierenden Gewinde, insbesondere Außengewinde des Spindelelements bereitstellt. Um die Buchse drehfest mit dem Bolzen zu verbinden, kann sie beispielsweise mit dem Bolzen verstiftet, verschraubt oder in diesen eingeklebt werden. Im Reparaturfall ist der Austausch einer solchen Buchse kostengünstiger als der Austausch des gesamten Bolzens, wobei bei geeigneter Materialwahl, etwa einer Messingbuchse, die Laufeigenschaften der zwischen Bolzen und Spindelelement vorhandenen Gewindepaarung verbessert und die erforderlichen Stellkräfte wiederum verringert werden.

In ähnlicher Weise kann der rotatorisch an der Spindel gelagerte Bolzen ebenfalls eine Buchse aufweisen, die beispielsweise mit dem Spindelelement drehfest verbunden ist. In diesem Fall findet eine Relativbewegung zwischen der Buchse und dem Bolzen statt.

Auch kann der zweite Bolzen die zweite Buchse in axialer Richtung beidseitig umgreifen, so dass sich die Buchse beim Ver- und Entbolzungsvorgang am Bolzen abstützen kann.

Für die Montage der Verbolzungseinrichtung kann der zweite Bolzen eine sich in radialer Richtung erstreckende Ausnehmung aufweisen, über welche die Buchse in den Bolzen eingesetzt werden kann. Des Weiteren kann auch die zweite Buchse ein Innengewinde aufweisen, welches mit einem, insbesondere dem gleichen Außengewinde des Spindelelements korrespondiert. Nachdem die zweite Buchse in den zweiten Bolzen eingesetzt ist, kann deren Position im zweiten Bolzen derart festgesetzt werden, dass die Buchse nur noch einen rotatorischen Freiheitsgrad aufweist. Zusätzlich kann das in die zweite Buchse eingeschraubte Spindelelement in der Buchse fixiert werden, etwa mit dieser verstiftet werden. Hierbei kann letztendlich das Spindelelement zusammen mit der Buchse nur noch um ihre Längsachse relativ zum zweiten Bolzen verdreht werden und ist in ihren übrigen Freiheitsgraden am zweiten Bolzen fixiert. Somit hat die zweite Buchse gegenüber dem zweiten Bolzen lediglich einen rotatorischen Freiheitsgrad.

Um eine Überbeanspruchung einzelner Komponenten, insbesondere der Halte- und Führungselemente zu vermeiden, kann der erste Bolzen und/oder der zweite Bolzen eine insbesondere radial umlaufende Schulter aufweisen. Diese kann sich an den für einen Eingriff in die zu verbolzenden Elemente ausgestalteten Verbolzungsabschnitt anschließen und sich in der maximal eingefahrenen Stellung an einem der zu verbolzenden Elemente abstützen.

Umgekehrt können die Bolzen so ausgestaltet sein, dass sie in einer maximal zusammengefahrenen Position aneinander anliegen und somit eine weitere "Entbolzungsbewegung" verhindern, welche möglicherweise zu einer Überbeanspruchung der Halte- und Führungselemente führen könnte.

Um das Spindelelement um seine Längsachse drehen zu können, kann dieses an zumindest einem Ende einen Werkzeugangriff aufweisen, etwa in Form eines Außensechskantes. Dort kann mit einem korrespondierenden Werkzeug das Spindelelement in Eingriff genommen werden und etwa unter Zuhilfenahme einer Handkurbel oder eines motorbetriebenen Schraubers in Drehung versetzt werden. Selbstverständlich ist es auch vorstellbar, dass das Spindelelement an beiden Enden einen solchen Werkzeugangriff aufweist, so dass die Verbolzungseinrichtung von beiden Seiten her betätigt werden kann. Hierfür ist für jeden Werkzeugangriff ein Zugang vorzusehen, der sich beispielsweise zentral und in axialer Richtung durch den entsprechenden Bolzen hindurch erstreckt.

Ein weiterer Aspekt der vorliegenden Erfindung betrifft eine Kran-Auslegerspitze mit einer wie oben beschriebenen Verbolzungseinrichtung. Eine solche Verbolzungseinrichtung kann insbesondere bei der Verbolzung einzelner Komponenten einer Auslegerspitze zum Einsatz kommen, etwa bei der Verbolzung einer Gittermastspitze mit einem Spitzenadapter, welcher die Gittermastspitze an den Kranausleger koppelt. Darüber hinaus betrifft die vorliegende Erfindung auch einen Kran mit einer entsprechenden Kran-Auslegerspitze oder mit einer wie oben beschriebenen Verbolzungseinrichtung, die zur Verbolzung von Krankomponenten dient. Grundsätzlich ist es vorstellbar, beliebige Krankomponenten mit der erfindungsgemäßen Verbolzungseinrichtung zu verbolzen, so etwa auch direkt mit dem Ausleger verbolzte Auslegerspitzen, die zum Rüsten beispielsweise um eine vertikale Achse relativ zum Ausleger verschwenkt werden können.

Im Folgenden wird die Erfindung anhand einer bevorzugten Ausführungsform und unter Bezugnahme auf die zugehörigen Figuren näher erläutert. In den Figuren zeigen:
- Figur 1:: eine Gittermastspitze mit der erfindungsgemäßen Verbolzungseinrichtung,
- Figur 2:: eine Schnittansicht entlang der Ebene A-A aus der Figur 1,
- Figur 3:: eine Detailansicht der oberen Verbolzung aus den Figuren 1 und 2,
- Figur 4:: eine Detailansicht der erfindungsgemäßen Verbolzungseinrichtung aus den Figuren 1 und 2,
- Figur 5:: die erfindungsgemäße Verbolzungseinrichtung in einem verbolzten Zustand,
- Figur 6:: die erfindungsgemäße Verbolzungseinrichtung in einem entbolzten Zustand.

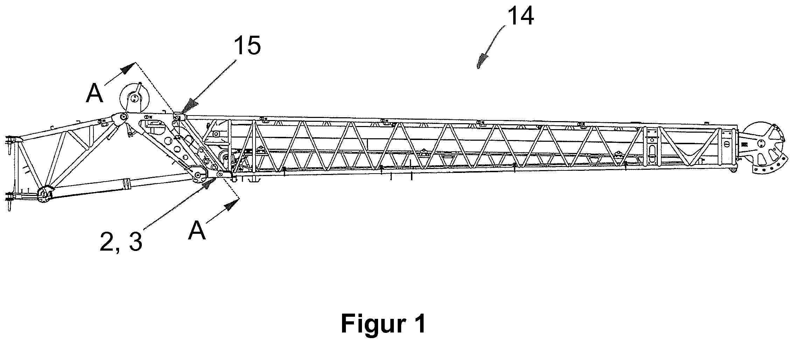

Um etwa mit einem Teleskopausleger eines Mobilkrans über Gebäudeoberkanten hinweg arbeiten zu können, wurden regelmäßig Auslegerspitzen eingesetzt. Eine solche Auslegerspitze ist beispielsweise in der Figur 1 mit dem Bezugszeichen 14 gekennzeichnet. Die in der Figur 1 zu sehende Auslegerspitze weist eine Gittermaststruktur auf und ist an seinem proximalen Ende (links in der Figur 1) mit einem nicht näher bezeichneten Spitzenadapter in horizontaler Richtung verbolzbar, der wiederum mit einem nicht gezeigten Teleskopausleger eines Mobilkrans verbolzt werden kann. Der Wippwinkel der Auslegerspitze 14 kann durch die Hydraulikzylinder des Spitzenadapters gegenüber dem Teleskopausleger verändert werden.

Um die optional rüstbare Gittermastspitze 14 mit dem Spitzenadapter zu verbolzen und diese somit mit dem Teleskopausleger zu verbinden, weist sie eine erfindungsgemäße Verbolzungseinrichtung mit zwei gegenüberliegenden Bolzen 2 und 3 auf. Im gezeigten Beispiel werden die darüberliegenden Verbolzungsstellen zwischen Gittermastspitze und Spitzenadapter mittels gewöhnlicher Bolzen 15 verbolzt, die mit Hammerschlägen in ihre entsprechenden Aufnahmen ein- und auch wieder ausgeschlagen werden. Beim Rüsten der Auslegerspitze werden die Bolzen 15 zuerst eingeschlagen, woraufhin die darunterliegende Verbolzungseinrichtung betätigt wird. Die herkömmlichen Bolzen 15 kommen im gezeigten Beispiel deswegen zum Einsatz, da beim Abrüsten der letzte Bolzen aus Sicherheitsgründen berührungsfrei entfernt werden soll, also ohne dass Personen physischen Kontakt zu Kranbauteilen halten.

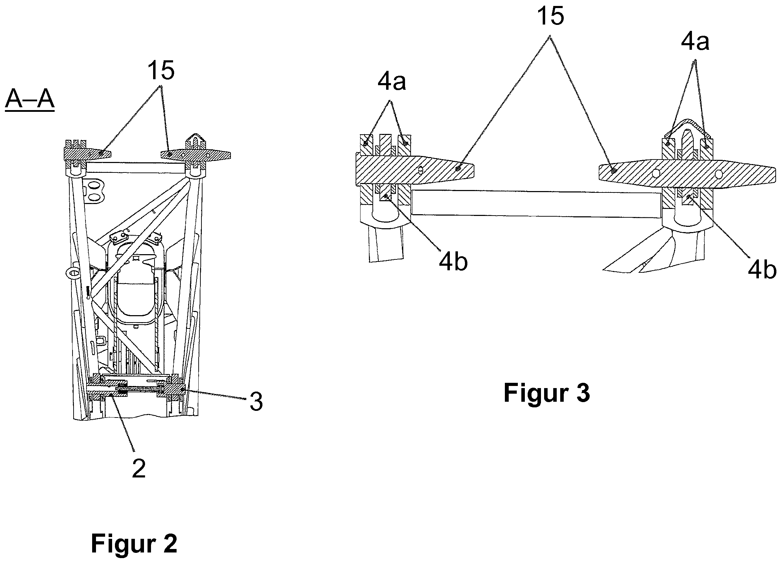

Die Figur 2 zeigt eine Schnittansicht entlang der Ebene A-A aus der Figur 1, woraus deutlich wird, dass die oberen Bolzen 15 auf konventionelle Art eingeschlagen und auch wieder ausgetrieben werden. An den unteren beiden Verbolzungsstellen hingegen kommt die erfindungsgemäße Verbolzungseinrichtung zum Einsatz, bei welcher zwei gegenüberliegende Bolzen 2 und 3 mechanisch in ihre Aufnahmen ein- und auch wieder aus diesen herausgefahren werden.

Die Figur 3 zeigt noch einmal detaillierter die Art der oberen Verbolzung mittels herkömmlicher Bolzen 15, die in entsprechende Aufnahmen der zu verbindenden Krankomponenten 4a und 4b eingreifen. Im gezeigten Beispiel sitzen die Bolzen 15 in entsprechenden Aufnahmen, welche jeweils durch die Gabelaugen des Elements 4a und das Stangenauge des Elements 4b gebildet werden. In gleicher Weise sitzen, wie im Folgenden beschrieben werden wird, die Bolzen 2 und 3 der erfindungsgemäßen Verbolzungseinrichtung in identisch ausgebildeten Aufnahmen.

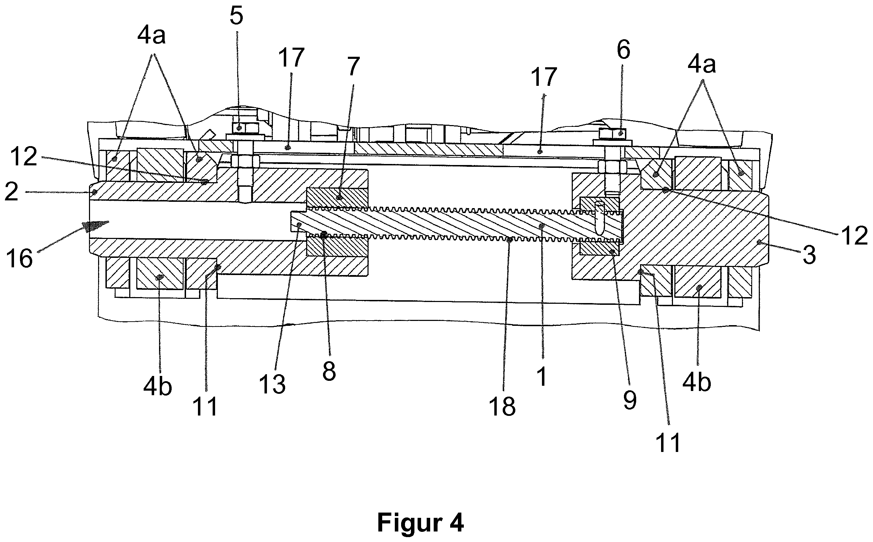

In der Figur 4 ist die bereits in der Figur 2 zu sehende erfindungsgemäße Verbolzungseinrichtung im Detail zu sehen. Das zentrale und als einfache Gewindestange ausgebildete Spindelelement 1 ist zu seinen beiden Enden hin mit Bolzen 2 und 3 gekoppelt, welche die gleiche zentrale Längsachse wie das Spindelelement 1 aufweisen. Der rechte Bolzen 3 ist über eine auf das rechte Spindelende aufgeschraubte und mit dieser verstifteten Buchse 9 an das Spindelelement 1 gekoppelt und weist gegenüber diesem lediglich einen rotatorischen Freiheitsgrad auf. Das Spindelelement 1 dreht sich zusammen mit der Buchse 9 innerhalb des Bolzens 3. Am gegenüberliegenden Ende des Spindelelements 1 ist ein zweiter Bolzen 2 an das Spindelelement 1 gekoppelt, und zwar mittels einer weiteren Gewindebuchse 7. Diese ist allerdings fest mit dem Bolzen 2 verbunden, und zwar mittels einer Verstiftung oder Verschraubung. An diesem Ende des Spindelelements 1 befindet sich auch ein Werkzeugangriff 13, der über die zentrale Längsbohrung 16 durch den Bolzen 2 und unter Zuhilfenahme einer Werkzeugverlängerung erreichbar ist.

Aus der Figur 4 wird deutlich, dass bei einer Rotation des Spindelelements 1 um dessen zentrale Längsachse der Bolzen 3 in seiner axialen Position gegenüber dem Spindelelement 1 verbleibt, während der Bolzen 2 aufgrund des Gewindeeingriffs zwischen dem Innengewinde 8 der Buchse 7 und dem Außengewinde 18 des Spindelelements 1 am Spindelelement 1 entlang wandert. Im Ergebnis wird je nach Drehrichtung der Abstand zwischen den Bolzen 2 und 3 vergrößert oder verringert. Die Figur 4 zeigt die maximal ausgefahrene Stellung der Verbolzungseinrichtung, in welcher die umlaufenden Schultern 11 der Bolzen 2 und 3 an den Gabelaugen des Elements 4a anliegen und somit ein weiteres Ausfahren der Verbolzungseinrichtung verhindern. An die Schultern 11 schließt sich jeweils ein Verbolzungsabschnitt 12 an, der einen kreisrunden Querschnitt aufweist und sowohl in die Gabelaugen des Elements 4a als auch in das Stangenauge des Elements 4b eingreift.

Um ein Mitdrehen der Bolzen 2 und 3 mit dem Spindelelement 1 zu unterbinden, sind beide Bolzen 2 und 3 über eigene Halteeinrichtungen 5 und 6 auf einen translatorischen Freiheitsgrad entlang der Spindellängsachse festgelegt. Die Halteeinrichtungen 5 und 6 bestehen im gezeigten Beispiel aus in radialer Richtung in die Bolzen 2 und 3 eingeschraubten und über Muttern gesicherte Schrauben, die am oberen Schaftende durch Schlitze 17 hindurchgreifen und somit nur eine nach außen oder nach innen gerichtete translatorische Bewegung der Bolzen 2 und 3 zulassen. Die Schlitze 17 können hierbei entweder am Element 4a oder am Element 4b ausgebildet sein und legen somit fest, an welchem der Elemente 4a oder 4b die Verbolzungseinrichtung nach dem Entbolzen verbleibt.

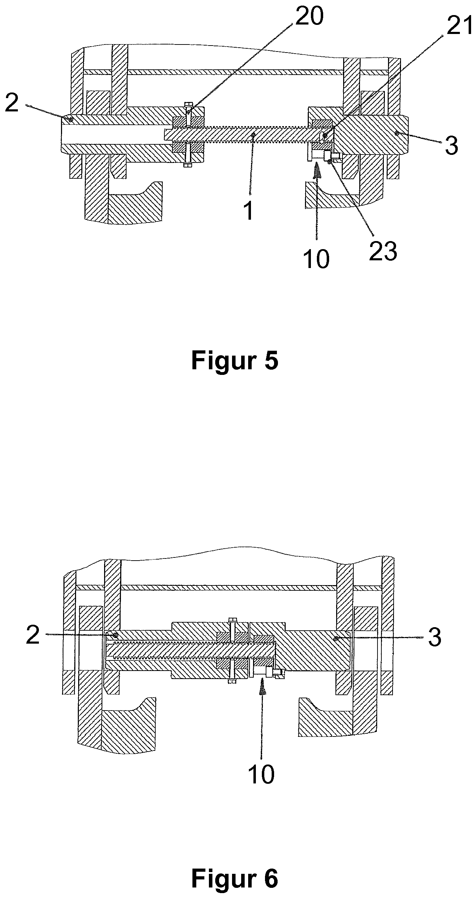

Die Figur 5 zeigt noch einmal die maximal ausgefahrenen Bolzen 2 und 3. Ferner ist zu sehen, dass die Buchse 7 (siehe Figur 4) mittels zweier Schrauben 20 mit dem Bolzen 2 verbunden ist, während die Buchse 9 (siehe Figur 4) über den Stift 21 mit dem Spindelelement 1 verbunden ist. Um eine Montage der Buchse 9 zu ermöglichen, weist der Bolzen 3 ein seitliches bzw. radiales Fenster 10 auf, über welches die Buchse 9 in den Bolzen 3 eingeschoben werden kann und über eine Schraube 23 in der dortigen Position gehalten wird. Dem sowohl in die Buchse 9 eingeschraubten als auch mit dieser verstifteten Spindelelement 1 verbleibt letztendlich nur ein rotatorischer Freiheitsgrad gegenüber dem Bolzen 3.

Wie in der Figur 6 zu sehen ist, wandert der Bolzen 2 beim Entbolzen auf dem Spindelelement 1 nach rechts, bis er in der maximal eingefahrenen Position am Bolzen 3 anliegt. Es ist auch zu sehen, dass das Spindelelement 1 hierbei in den Zugang 16 im Bolzen 2 einfährt. Im gezeigten Beispiel verbleiben die außenliegenden Abschnitte der Bolzen 2 und 3 in den entsprechenden inneren Gabelaugen und halten die Verbolzungseinrichtung, zusätzlich zu den Halteeinrichtungen 5 und 6 am Element 4a.

## Patentansprüche

1. Verbolzungseinrichtung mit zwei verdrehsicher gehaltenen Bolzen (2, 3), die über ein Spindelelement (1) aneinander gekoppelt sind, wobei ein erster Bolzen (2) über einen Gewindeeingriff (8) mit einem korrespondierenden Gewinde (18) des Spindelelements (1) in Verbindung steht, und wobei eine Rotation des Spindelelements (1) um dessen zentrale Längsachse eine Bewegung des ersten Bolzens (2) entlang der Längsachse bewirkt, **dadurch gekennzeichnet, dass** ein zweiter Bolzen (3) in einer festgelegten axialen Position rotatorisch am Spindelelement (1) gelagert ist.

2. Verbolzungseinrichtung nach Anspruch 1, wobei das Spindelelement (1) koaxial zu den Bolzen (2, 3) angeordnet ist und/oder die Verbolzungseinrichtung gegenüber, insbesondere an zumindest einem der zu verbolzenden Elemente (4a, 4b) schwimmend gelagert ist.

3. Verbolzungseinrichtung nach einem der Ansprüche 1 oder 2, wobei der erste Bolzen (2) ein erstes Halteelement (5) und der zweite Bolzen (3) ein zweites Halteelement (6) aufweist, und wobei das erste und das zweite Halteelement (5, 6) sowohl den jeweiligen Bolzen (2; 3) gegenüber dem Spindelelement (1) verdrehsicher hält, als auch die Verbolzungseinrichtung gegenüber zumindest einem der zu verbolzenden Elemente (4a, 4b) schwimmend lagernd hält.

4. Verbolzungseinrichtung nach einem der Ansprüche 1 bis 3, wobei der erste Bolzen (2) eine erste, drehfest mit dem Bolzen (2) verbundene Buchse (7) aufweist, die ihrerseits einen Gewindeeingriff (8) mit einem korrespondierenden Außengewinde (18) des Spindelelements (1) bereitstellt.

5. Verbolzungseinrichtung nach einem der Ansprüche 1 bis 4, wobei der zweite Bolzen (3) eine zweite, drehfest mit dem Spindelelement (1) verbundene Buchse (9) aufnimmt.

6. Verbolzungseinrichtung nach Anspruch 5, wobei der zweite Bolzen (3) die zweite Buchse (9) in axialer Richtung beidseitig umgreift und/oder eine sich in radialer Richtung erstreckende Ausnehmung (10) aufweist, über welche die zweite Buchse (9) in den zweiten Bolzen (3) eingesetzt werden kann.

7. Verbolzungseinrichtung nach einem der Ansprüche 5 oder 6, wobei die zweite Buchse (9) gegenüber dem zweiten Bolzen (3) einen, insbesondere ausschließlich einen rotatorischen Freiheitsgrad besitzt.

8. Verbolzungseinrichtung nach einem der Ansprüche 1 bis 7, wobei der erste Bolzen (2) und/oder der zweite Bolzen (3) eine insbesondere radial umlaufende Schulter (11) aufweist, die sich insbesondere an den für einen Eingriff in die zu verbolzenden Elemente (4) ausgestalteten Verbolzungsabschnitt (12) anschließt.

9. Verbolzungseinrichtung nach einem der Ansprüche 1 bis 8, wobei das Spindelelement (1) an zumindest einem Ende einen Werkzeugangriff (13) aufweist, insbesondere auf der Seite des ersten Bolzens (2), wobei der auf der Seite eines Werkzeugangriffs (13) liegende Bolzen (2; 3) einen sich in axialer Richtung erstreckenden Zugang (16) zum Werkzeugangriff (13) aufweist.

10. Kran-Auslegerspitze mit einer Verbolzungseinrichtung nach einem der Ansprüche 1 bis 9, zur Verbolzung einer Gittermastspitze mit einem Spitzenadapter.

## Claims

1. Bolting device having two non-rotatably held bolts (2, 3) which are coupled to each other via a spindle element (1), wherein a first bolt (2) is connected to a corresponding thread (18) of the spindle element (1) via a threaded engagement (8), and wherein a rotation of the spindle element (1) about its central longitudinal axis effects a movement of the first bolt (2) along the longitudinal axis, **characterised in that** a second bolt (3) is mounted rotationally on the spindle element (1) in a specified axial position.

2. Bolting device according to claim 1, wherein the spindle element (1) is arranged coaxially to the bolts (2, 3) and/or the bolting device is floatingly mounted with respect to, in particular on, at least one of the elements (4a, 4b) to be bolted.

3. Bolting device according to one of claims 1 or 2, wherein the first bolt (2) has a first holding element (5), and the second bolt (3) has a second holding element (6), and wherein the first and the second holding element (5, 6) holds both the respective bolt (2; 3) non-rotatably with respect to the spindle element (1) and also holds the bolting device in a floatingly mounted manner with respect to at least one of the elements (4a, 4b) to be bolted.

4. Bolting device according to one of claims 1 to 3, wherein the first bolt (2) has a first bushing (7) which is connected to the bolt (2) in a rotationally fixed manner and which in turn provides a threaded engagement (8) with a corresponding outer thread (18) of the spindle element (1).

5. Bolting device according to one of claims 1 to 4, wherein the second bolt (3) receives a second bushing (9) which is connected to the spindle element (1) in a rotationally fixed manner.

6. Bolting device according to claim 5, wherein the second bolt (3) surrounds the second bushing (9) on both sides in the axial direction and/or has a recess (10) extending in the radial direction via which the second bushing (9) can be inserted into the second bolt (3).

7. Bolting device according to one of claims 5 or 6, wherein the second bushing (9) has a degree of freedom, in particular exclusively a rotatory degree of freedom, with respect to the second bolt (3).

8. Bolting device according to one of claims 1 to 7, wherein the first bolt (2) and/or the second bolt (3) has a shoulder (11), in particular a radially circumferential shoulder (11), which attaches, in particular, to the bolting section (12) designed for an engagement in the elements (4) to be bolted.

9. Bolting device according to one of claims 1 to 8, wherein the spindle element (1) has a tool engagement portion (13) on at least one end, in particular on the side of the first bolt (2), wherein the bolt (2; 3) resting on the side of a tool engagement portion (13) has an entry (16) to the tool engagement portion (13), said entry extending in the axial direction.

10. Crane boom tip having a bolting device according to one of claims 1 to 9 for bolting a lattice mast tip having a tip adaptor.

## Revendications

1. Dispositif de boulonnage comprenant deux boulons (2, 3) maintenus immobiles en rotation et couplés l'un à l'autre par un élément de broche (1), un premier boulon (2) étant raccordé à un filetage (18) correspondant de l'élément de broche (1) au moyen d'une coopération par filetage (8), et une rotation de l'élément de broche (1) sur son axe longitudinal central entraînant un déplacement du premier boulon (2) le long de l'axe longitudinal, **caractérisé en ce qu'**un deuxième boulon (3) est monté rotatif sur l'élément de broche (1) en une position axiale fixée.

2. Dispositif de boulonnage selon la revendication 1, dans lequel l'élément de broche (1) est agencé coaxial aux boulons (2, 3) et/ou le dispositif de boulonnage est monté flottant par rapport à, et notamment sur, au moins un des éléments à boulonner (4a, 4b).

3. Dispositif de boulonnage selon l'une des revendications 1 et 2, dans lequel le premier boulon (2) présente un premier élément de retenue (5) et le deuxième boulon (3) présente un deuxième élément de retenue (6), et dans lequel le premier et le deuxième élément de retenue (5, 6) donnent lieu à la fois à une retenue de leur boulon (2 ; 3) respectif immobile en rotation par rapport à l'élément de broche (1) et à une retenue en montage flottant du dispositif de boulonnage par rapport à au moins un des éléments à boulonner (4a, 4b).

4. Dispositif de boulonnage selon l'une des revendications 1 à 3, dans lequel le premier boulon (2) présente un premier manchon (7) raccordé de manière fixe en rotation avec le boulon (2) et assurant une coopération par filetage (8) avec un filetage extérieur (18) correspondant de l'élément de broche (1).

5. Dispositif de boulonnage selon l'une des revendications 1 à 4, dans lequel le deuxième boulon (3) loge un deuxième manchon (9) raccordé de manière fixe en rotation avec l'élément de broche (1).

6. Dispositif de boulonnage selon la revendication 5, dans lequel le deuxième boulon (3) encercle de part et d'autre le deuxième manchon (9) dans la direction axiale et/ou présente un évidement (10) s'étendant dans la direction radiale et grâce auquel le deuxième manchon (9) peut être introduit dans le deuxième boulon (3).

7. Dispositif de boulonnage selon l'une des revendications 5 et 6, dans lequel le deuxième manchon (9) présente un degré de liberté par rapport au deuxième boulon (3), notamment exclusivement un degré de liberté en rotation.

8. Dispositif de boulonnage selon l'une des revendications 1 à 7, dans lequel le premier boulon (2) et/ou le deuxième boulon (3) présentent un épaulement (11) notamment radialement périphérique, qui est notamment adjacent à la section de boulonnage (12) conçue pour pénétrer dans les éléments à boulonner (4).

9. Dispositif de boulonnage selon l'une des revendications 1 à 8, dans lequel l'élément de broche (1) présente, sur au moins une extrémité, une prise d'outil (13), notamment située du côté du premier boulon (2), ledit boulon (2 ; 3) situé du côté de la prise d'outil (13) présentant un accès (16) à la prise d'outil (13) qui se prolonge dans la direction axiale.

10. Pointe de flèche de grue comportant un dispositif de boulonnage selon l'une des revendications 1 à 9 pour le boulonnage d'une fléchette avec un adaptateur de pointe.
